# EUROPEAN PATENT APPLICATION

(11) **EP 2 703 296 A1**
(43) Date of publication of application: **05.03.2014**
(21) Application number: 12777499.0
(22) Date of filing: 20.04.2012
(51) Int. Cl.: B64D 45/02, B64C 1/00, B64C 3/34, F16B 37/14, F16B 41/00

(54) **CAP AND AFFIXATION STRUCTURE SECTION USING SAME**

(30) Priority: 28.04.2011 JP 2011102144; 17.08.2011 JP 2011178423
(71) Applicant: Mitsubishi Heavy Industries, Ltd., Tokyo 108-8215 (JP)
(72) Inventor: BESSHO, Masahiro, Tokyo 108-8215 (JP); HIMENO, Takamitsu, Tokyo 108-8215 (JP); WATANABE, Yasunori, Tokyo 108-8215 (JP); YAMAKOSHI, Hideo, Tokyo 108-8215 (JP); UMEMOTO, Soichiro, Tokyo 108-8215 (JP); NISHIMURA, Wataru, Tokyo 108-8215 (JP); KAMINO, Yuichiro, Tokyo 108-8215 (JP); ISHIKAWA, Naomoto, Tokyo 108-8215 (JP); KAMIHARA, Nobuyuki, Tokyo 108-8215 (JP); MORIYA, Fumitoshi, Tokyo 108-8215 (JP); AOSHIMA, Yoshiro, Tokyo 108-8215 (JP); TAKASU, Toru, Tokyo 108-8215 (JP)
(74) Representative: Henkel, Breuer & Partner
(86) International application number: PCT/JP2012/060704
(87) International publication number: WO 2012/147645

(57) **Abstract**

This cap is configured so that, in order to enable the cap to be affixed without using a fastener having a special configuration, the cap is applied to an affixation structure section (1) in which structure members (3) superposed on each other are affixed to each other by a fastener (5) inserted through through-holes (3a) formed in the structure members (3) and by a collar (7) fastened to the front end (5a) of the fastener (5), the front end (5a) protruding from the surface of a structure member (3), and the cap (9) is disposed so as to surround the front end (5a) of the fastener (5) and the collar (7). The cap (9) is mounted without engagement with the front end (5a) of the fastener (5) and the collar (7), and the inner peripheral surface (9e) has formed therein a groove (9d) for containing a sealant (11) filled into a space formed between the inner peripheral surface and the surface of the structure member (3).

## Description

### {Technical Field}

The present invention relates to a cap used in a fixing structure for fixing structural members of an aircraft, for example.

### {Background Art}

A fuselage of an aircraft is formed of a plurality of structural members formed of aluminum-alloy metallic materials or FRP (fiber-reinforced plastic) composite materials, for example, and the structural members are fixed to each other by a fixing structure using a number of fasteners. Specifically, through-holes are formed in the plurality of overlaid structural members, and metallic fasteners are inserted into the through-holes. Then, metallic collars are fastened onto distal ends of the fasteners, thereby fixing the plurality of structural members.

Furthermore, plastic caps are provided so as to surround the collars and the distal ends of the fasteners, in some cases. When lightning strikes the aircraft, the caps are used to prevent the occurrence of sparks between the structural members made of the composite material and the metallic fasteners and collars. Such caps are effective particularly when the collars and the distal ends of the fasteners are located on a fuel tank side.

PTL 1 discloses a fixing structure using such a cap. In PTL 1, the occurrence of sparks is prevented by filling gas inside the cap.

### {Citation List}

### {Patent Literature}

{PTL 1} US Patent No. 4905931
{PTL 2} US Patent No. 6135691
{PTL 3} Japanese Unexamined Patent Application, Publication No. 2010-254287

### {Summary of Invention}

### {Technical Problem}

However, the cap described in PTL 1 is fixed only with a sealant applied to an outer periphery thereof, which is lacking in cap fixing reliability, and there is a fear that the cap may fall off.

In particular, during operation, an aircraft is subjected to severe temperature changes from a high temperature (for example, 100 °C) on the ground to a low temperature (for example, -60 °C) during flight. Thus, the cap must remain fixed without falling off even when such a temperature change occurs.

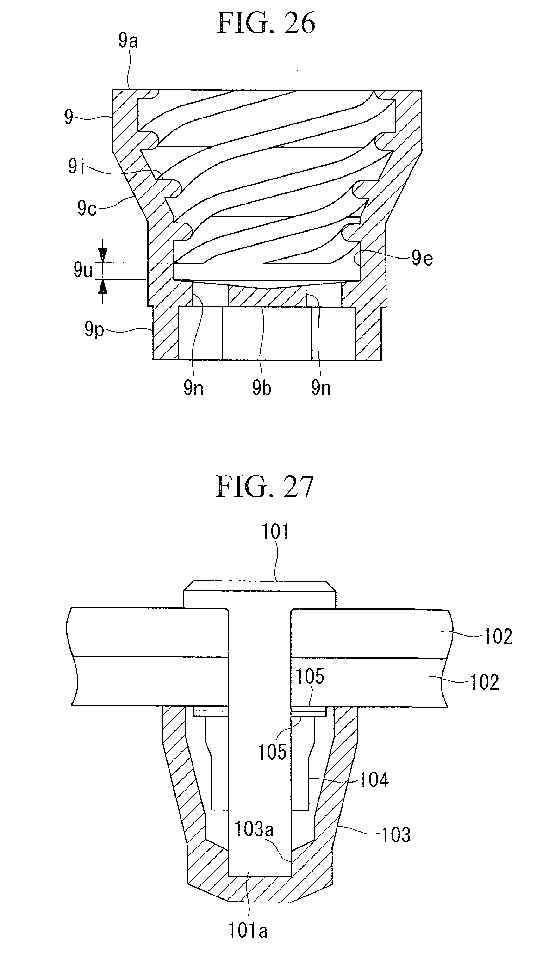

On the other hand, PTL 2 and PTL 3 disclose inventions in which fixing is performed by screwing together a fastener and a cap. Specifically, as shown in Fig. 27, an invention is disclosed in which a male thread portion 101a is formed at a distal end of a fastener 101, a female thread portion 103a corresponding to the male thread portion 101a is formed in an inner periphery of the cap 103, and the distal end of the fastener 101 and the cap 103 are screwed together, thereby fixing the cap 103. Note that reference numeral 102 denotes structural members, reference numeral 104 denotes a collar, and reference numeral 105 denotes a washer.

However, with the structure shown in Fig. 27, although the cap 103 can be reliably fixed, it is necessary to elongate the distal end of the fastener 101 in the axial direction in order to form, at the distal end of the fastener 101, the male thread portion 101a to be screwed into the cap 103. Specifically, a specially-structured fastener needs to be used, and conventional general-purpose fasteners cannot be used, thus causing an increase in cost. Furthermore, because the distal end of the fastener 101 is elongated in the axial direction, the axial length of the cap 103 is increased accordingly, thus increasing the material cost of the cap.

The present invention has been made in view of such circumstances, and an object thereof is to provide a cap capable of being fixed without using a specially-structured fastener and to provide a fixing structure using such a cap.

### {Solution to Problem}

In order to solve the above-described problems, the cap and the fixing structure using the same of the present invention employ the following solutions.

Specifically, the present invention provides a cap that is used in a fixing structure for fixing a plurality of overlaid structural members by means of a fastener inserted into through-holes formed in the overlaid structural members and a collar fastened onto a distal end of the fastener protruding from a surface of the structural members and that is disposed so as to surround the collar and the distal end of the fastener, in which the cap is attached, in a non-engaged state, to the collar and the distal end of the fastener, and an engagement part that engages with a filling material to be filled in a space formed between an inner peripheral surface of the cap and the surface of the structural members is formed in the inner peripheral surface thereof.

The cap is attached, in a non-engaged state, to the collar and the distal end of the fastener. The engagement part is formed in the inner peripheral surface of the cap, and the engagement part is engaged with the filling material, thereby mechanically coupling the cap with the filling material. Thus, the cap can be stably fixed while preventing it from falling off, without adopting a structure in which a cap and a distal end of a fastener are screwed together.

Furthermore, because a male thread portion onto which the cap is to be screwed does not need to be additionally provided at the distal end of the fastener, it is possible to use existing fasteners on which a male thread portion is not additionally provided and to avoid a situation in which the distal end of the fastener is elongated due to the additionally provided male thread portion, which would increase the axial length of the cap. Furthermore, because the axial lengths of the cap and the distal end of the fastener can be reduced, it is possible to reduce the risk of interference with structural members adjacent thereto and to reduce the weight.

Note that, although a sealant is typically used as the filling material, for example, another filling material, such as an adhesive material, can be used.

Furthermore, in the cap of the present invention, the engagement part is formed of a concave part that accommodates the filling material.

The concave part is formed in the inner peripheral surface of the cap, and the filling material is accommodated in the concave part. Thus, the cap and the filling material can be engaged, thereby being mechanically coupled.

Furthermore, if the concave part is visible from the outside, it can be used as a marker line indicating the amount of the filling material to be filled.

Note that through-grooves that penetrate the cap to an outer peripheral surface thereof may be provided in the concave part so as to guide the filling material to the outer side of the cap, thereby reliably filling the filling material in the concave part.

Furthermore, in the cap of the present invention, the engagement part is formed of a convex part that protrudes into the filling material.

The convex part is formed on the inner peripheral surface of the cap so as to protrude into the filling material, thereby making it possible to engage and mechanically couple the cap with the filling material.

Furthermore, if the convex part is visible from the outside, it can also be used as a marker line indicating the amount of the filling material to be filled.

Furthermore, when the amount of protrusion of the convex part is adjusted to set a desired clearance with respect to the collar or the fastener, the convex part can also be used as a centering part. Thus, when the cap is attached, because a situation in which the cap is misaligned depending on the level of skill of a worker is prevented, the ability to prevent sparks at the time of a lightning strike is not deteriorated.

Furthermore, in the cap of the present invention, the engagement part is formed in an endless manner along an annular track whose center axis line is the same as a center axis line of the fastener.

The engagement part is formed in an endless manner along an annular track whose center axis line is the same as the center axis line of the fastener, thereby making it possible to form the engagement part along the entire circumference of the inner peripheral surface of the cap. Thus, the mechanical coupling strength between the cap and the filling material can be increased.

Furthermore, in the cap of the present invention, the engagement part is formed of multiple separate engagement parts that are discretely formed along an annular track whose center axis line is the same as a center axis line of the fastener.

The multiple separate engagement parts may be discretely-formed along the annular track whose center axis line is the same as the center axis line of the fastener to form the engagement part. The separate engagement parts may be concave parts or convex parts.

Furthermore, in the cap of the present invention, the engagement part is provided at multiple stages at different positions in the direction of a center axis line of the fastener.

By providing the engagement part at multiple stages, the mechanical coupling strength between the cap and the filling material can be further increased.

When the engagement part is provided at multiple stages, only the concave part may be provided at multiple stages, or only the convex part may be provided at multiple stages. Alternatively, the concave part and the convex part may be provided in combination at multiple stages.

Furthermore, in the cap of the present invention, the engagement part is formed along a spiral shape whose center axis line is the same as a center axis line of the fastener.

By forming the engagement part in a spiral manner to increase the area where the engagement part is formed, the mechanical coupling strength between the cap and the filling material can be further increased.

Furthermore, because the engagement part is spirally formed, when the cap is manufactured through injection molding, the cap can be easily released by being rotated in a spiral manner, thus providing the cap with excellent moldability.

Furthermore, when the engagement part is formed of the concave part, a spiral concave groove is formed, and voids (bubbles) generated in the filling material can be guided along the spiral concave groove and discharged to the outside of the cap. Thus, voids in the filling material can be removed, enhancing the reliability.

Furthermore, in the cap of the present invention, the spiral shape is provided at multiple locations.

The spiral shape of the engagement part is provided at multiple locations to increase the area of contact between the engagement part and the filling material. Thus, the mechanical coupling strength between the cap and the filling material can be increased even more.

Furthermore, because the increased number of engagement parts are each formed in a spiral shape, when the cap is manufactured through injection molding, the cap can be easily released by being rotated along the spiral shape, thus providing the cap with excellent moldability.

Furthermore, because the engagement part is formed in a spiral shape at multiple locations, when the cap is manufactured through injection molding, the angle of rotation of the cap is reduced, thereby making it possible to improve the production efficiency of the cap.

Furthermore, in the cap of the present invention, the spiral shape is formed so as not to reach a bottom of the cap.

If the spiral shape reaches the bottom of the cap, air mixed when the filling material is filled in the cap tends to remain in a gap between the spiral shape and the bottom of the cap. The air remaining in the cap in this way produces a reaction force that causes the cap to fall off due to its compressibility and also forms, in the cap, cavities where there is no filling material. Thus, the ability to prevent sparks at the time of a lightning strike is reduced.

Therefore, by forming the spiral shape so as not to reach the bottom of the cap, it is possible to prevent air mixed in the filling material from remaining in the cap and to improve the fixing performance of the cap and the ability to prevent sparks at the time of a lightning strike.

Furthermore, in the cap of the present invention, a bottom of the concave part or a distal end of the convex part has substantially an round shape.

The bottom of the concave part, in which the filling material is accommodated, or the distal end of the convex part, which protrudes into the filling material, is formed in substantially an round shape. Thus, compared with a case in which the bottom of the concave part or the distal end of the convex part is formed in substantially a quadrangular shape, it does not have corners, so that bubbles (voids) generated in the filling material can be removed even more effectively when the cap is attached. Therefore, it is possible to ensure a sufficient thickness of the filling material required for electrical endurance, thus enhancing the reliability of the spark preventing function.

Furthermore, in the cap of the present invention, a bottom of the concave part or a distal end of the convex part has a chamfered shape.

The bottom of the concave part, in which the filling material is accommodated, or the distal end of the convex part, which protrudes into the filling material, is formed in a chamfered shape. Thus, compared with a case in which the concave part or the distal end of the convex part is formed in substantially a quadrangular shape, it does not have corners, so that bubbles (voids) generated in the filling material can be removed when the cap is attached. Therefore, it is possible to ensure a sufficient thickness of the filling material required for electrical endurance, thus enhancing the reliability of the spark preventing function.

Furthermore, in the cap of the present invention, the fastener has, at substantially a center of the distal end thereof, a positioning hole that is used to position the fastener when the collar is fastened onto the fastener; and a projecting part that projects toward the fastener and that is inserted into the positioning hole to perform positioning is formed on the inner peripheral surface at a position facing the distal end of the fastener.

By engaging the projecting part, which is formed on the inner peripheral surface at the position facing the distal end of the fastener and which projects toward the fastener, with the fastener in which the positioning hole is provided to position the fastener when the collar is fastened onto the fastener, the fastener and the cap can be easily and reliably centered. Therefore, while preventing the cap from being misaligned, it is possible to ensure a sufficient thickness of the filling material required for electrical endurance, thus enhancing the reliability of the spark preventing function.

Furthermore, in the cap of the present invention, the inner peripheral surface is formed in a shape for supporting the collar via part of the convex part such that a center axis line of the fastener becomes a common center axis line.

The inner peripheral surface is formed in a shape for supporting the collar via part of the convex part such that the center axis line of the fastener is the same as the center axis line of the cap. Thus, by supporting the collar with the convex part, the fastener and the cap can be easily and reliably centered. Therefore, while preventing the cap from being misaligned, it is possible to ensure a sufficient thickness of the filling material required for electrical endurance, thus enhancing the reliability of the spark preventing function.

Furthermore, in the cap of the present invention, the engagement part has a turn restricting shape for restricting, by engaging with the filling material that has been solidified, turning of the cap about a center axis line of the fastener with respect to the fastener and the collar.

According to the above-described structure, when the filling material filled in the cap is solidified and is engaged with the engagement part, turning of the cap with respect to the fastener and the collar is restricted. Thus, the cap can be stably fixed while preventing it from falling off.

In particular, in the case where the spiral engagement part to be engaged with the filling material is provided in the cap to prevent the cap from falling off in the axial direction, when the turn-restricting-shape engagement part for restricting turning of the cap is also provided, as described above, a situation in which the cap is loosened by freely turning along the spiral shape is avoided, thus more effectively preventing the cap from falling off.

Furthermore, in the cap of the present invention, the turn restricting shape engages with the filling material at a position eccentric with respect to a center axis line of the fastener.

According to the above-described structure, because the turn restricting shape formed in the cap engages with the filling material at the position eccentric with respect to the center axis line of the fastener, when the filling material is solidified, turning of the cap with respect to the fastener and the collar is restricted. Therefore, the cap is prevented from turning, being loosened, and falling off.

Furthermore, in the cap of the present invention, the engagement part having the turn restricting shape is formed of a through-hole that is formed so as to penetrate the cap at least one position in an outer peripheral portion thereof.

According to the above-described structure, when the cap is attached to the fastener and the collar, the filling material filled in the cap is pushed out from the through-hole and is solidified. Because this through-hole is located in the outer peripheral portion of the cap, turning of the cap is restricted by the filling material that has been pushed out and solidified at the position eccentric with respect to the turning axis of the cap (the center axis line of the fastener). Therefore, the cap is prevented from turning, being loosened, and falling off.

Furthermore, in the cap of the present invention, the engagement part having the turn restricting shape is formed of at least one through-hole that is formed so as to penetrate the cap at a position in a bottom thereof, the position being located eccentrically with respect to a center axis line of the fastener.

According to the above-described structure, when the cap is attached, the filling material filled in the cap is pushed out from the through-hole and solidified. Because the through-hole is located eccentrically with respect to the center axis line of the fastener, turning of the cap is restricted by the filling material that has been pushed out from the through-hole and solidified. Therefore, the cap is prevented from turning, being loosened, and falling off.

Furthermore, in the cap of the present invention, the engagement part having the turn restricting shape is formed of a vertical groove that extends on the inner peripheral surface along the center axis line.

According to the above-described structure, when the cap is attached, the filling material filled in the cap enters the vertical groove and is solidified. Because the vertical groove is located eccentrically with respect to the center axis line of the fastener, turning of the cap is restricted by the filling material that has entered the vertical groove and has been solidified, and the cap is prevented from turning, being loosened, and falling off.

Furthermore, in the cap of the present invention, the engagement part having the turn restricting shape is formed of a dimple that is cut in the inner peripheral surface.

According to the above-described structure, when the cap is attached, the filling material filled in the cap enters the dimple and is solidified. Because the dimple is located eccentrically with respect to the center axis line of the fastener, turning of the cap is restricted by the filling material that has entered the dimple and has been solidified, and the cap is prevented from turning, being loosened, and falling off.

Furthermore, in the cap of the present invention, the engagement part having the turn restricting shape is formed through post-processing with a cutting tool after molding of the cap.

Thus, when the cap is manufactured by injection molding of a resin material, the engagement part for restricting turning of the cap does not need to be formed, and thus the structure of a mold used for injection molding can be made simple. Furthermore, the engagement part for restricting turning can be additionally provided on a ready-made cap to make an improvement.

Furthermore, in the cap of the present invention, the engagement part having the turn restricting shape is formed of a protrusion that extends from an outer peripheral portion at an open end of the cap along a surface direction of the structural members.

By providing the protrusion on the outer peripheral portion at the open end of the cap, in this way, when the filling material is filled in the cap, and the cap is attached to the fastener and the collar, the protrusion is enclosed by the filling material leaking out from the inside of the cap. When the filling material is solidified, the protrusion is engaged with the filling material, thus restricting turning of the cap. Therefore, the cap is prevented from turning, being loosened, and falling off.

Furthermore, in the cap of the present invention, the engagement part having the turn restricting shape is formed of a notch that is formed at an open end of the cap.

By providing the notch at the open end of the cap, in this way, when the filling material is filled in the cap, and the cap is attached to the fastener and the collar, the filling material in the cap leaks out from the notch. When the filling material is solidified, the notch is engaged with the filling material, thus restricting turning of the cap. Therefore, the cap is prevented from turning, being loosened, and falling off.

Furthermore, in the cap of the present invention, the engagement part having the turn restricting shape is formed of a polygonal frame that is formed on an outer surface of a bottom of the cap and a through-hole that is formed in the bottom so as to be located inside the frame.

According to the above-described structure, when the cap is attached to the fastener and the collar, the filling material filled in the cap is pushed out from the through-hole to an area inside the frame and is solidified. Because the frame is polygonal, the filling material that has been pushed out to the inside of the frame and solidified and the frame are engaged with each other, thus restricting turning of the cap. Therefore, the cap is prevented from turning, being loosened, and falling off.

Furthermore, in the cap of the present invention, a shape of an inner surface of a bottom of the cap is a cone in which a distance to the distal end of the fastener is increased from an outer peripheral portion of the bottom toward a center thereof; and a through-hole is formed in the bottom.

When the filling material is filled in the cap, and the cap is attached to the fastener and the collar, air mixed together with the filling material tends to remain in a circumferential edge of the cap bottom. Then, as described above, by making the shape of the inner surface of the bottom conical, air remaining in the circumferential edge of the cap bottom can be moved toward the center of the bottom and discharged to the outside from the through-hole formed in the bottom.

Thus, it is possible to prevent air mixed in the filling material from remaining in the cap and to improve the fixing performance of the cap and the ability to prevent sparks at the time of a lightning strike.

Furthermore, the present invention provides a fixing structure including: a fastener that is inserted into through-holes formed in a plurality of overlaid structural members; a collar that is fastened onto a distal end of the fastener protruding from a surface of the structural members; and a cap that is disposed so as to surround the collar and the distal end of the fastener, the structural members being fixed to each other by means of the fastener and the collar, in which the cap is attached, in a non-engaged state, to the collar and the distal end of the fastener; and an engagement part that engages with a filling material to be filled in a space formed between an inner peripheral surface of the cap and the surface of the structural members is formed in the inner peripheral surface thereof.

The cap is attached, in a non-engaged state, to the collar and the distal end of the fastener. The engagement part is formed in the inner peripheral surface of the cap, and the engagement part is engaged with the filling material, thereby mechanically coupling the cap with the filling material. Thus, the cap can be stably fixed while preventing it from falling off, without adopting a structure in which a cap and a distal end of a fastener are screwed together.

Furthermore, because a male thread portion onto which the cap is to be screwed does not need to be additionally provided at the distal end of the fastener, it is possible to use existing fasteners on which a male thread portion is not additionally provided and to avoid a situation in which the distal end of the fastener is elongated due to the additionally provided male thread portion.

Note that, although a sealant is typically used as the filling material, for example, another filling material, such as an adhesive material, can be used.

Furthermore, in the fixing structure of the present invention, the engagement part has a turn restricting shape for engaging the cap with the filling material filled between an outer peripheral surface of the cap and the surface of the structural members, at a position eccentric with respect to a center axis line of the fastener.

According to the above-described structure, because the turn restricting shape formed in the cap engages with the filling material at the position eccentric with respect to the center axis line of the fastener, when the filling material is solidified, turning of the cap with respect to the fastener and the collar is restricted. Therefore, the cap is prevented from turning, being loosened, and falling off.

Furthermore, in the fixing structure of the present invention, the filling material is provided between an outer peripheral surface of the cap and the surface of the structural members.

By providing the filling material between the outer peripheral surface of the cap and the surface of the structural members, the cap can be fixed while being held from the outer peripheral surface. Thus, the coupling strength of the cap can be further improved.

Furthermore, providing the filling material between the outer peripheral surface of the cap and the surface of the structural members can be realized by allowing the filling material to leak out (be squeezed out) from a gap between the open end of the cap and the surface of the structural members when the cap is attached.

### {Advantageous Effects of Invention}

The cap is attached, in a non-engaged state, to the collar and the distal end of the fastener. The engagement part is formed in the inner peripheral surface of the cap, and the engagement part is engaged with the filling material, thereby mechanically coupling the cap with the filling material. Thus, the cap can be stably fixed while preventing it from falling off, without adopting a structure in which a cap and a distal end of a fastener are screwed together.

Furthermore, because a male thread portion onto which the cap is to be screwed does not need to be additionally provided at the distal end of the fastener, it is possible to use existing fasteners on which a male thread portion is not additionally provided and to avoid a situation in which the distal end of the fastener is elongated due to the additionally provided male thread portion, which would increase the axial length of the cap.

### {Brief Description of Drawings}

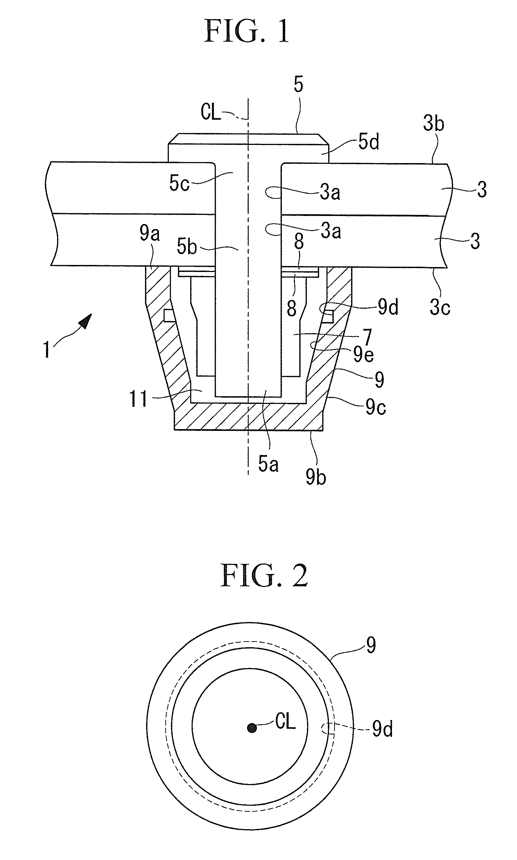

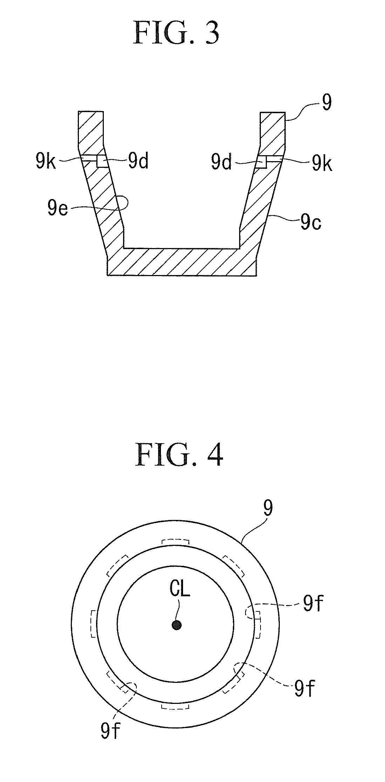

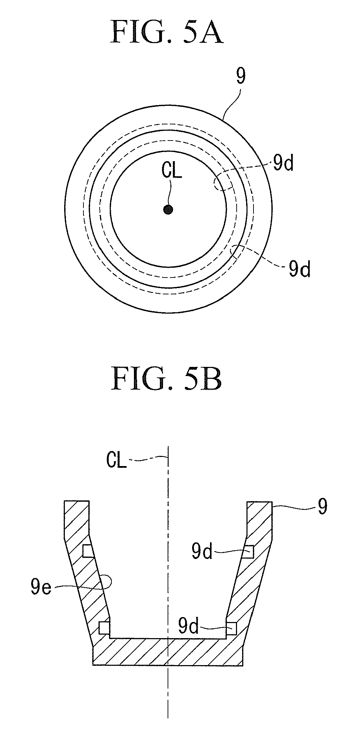

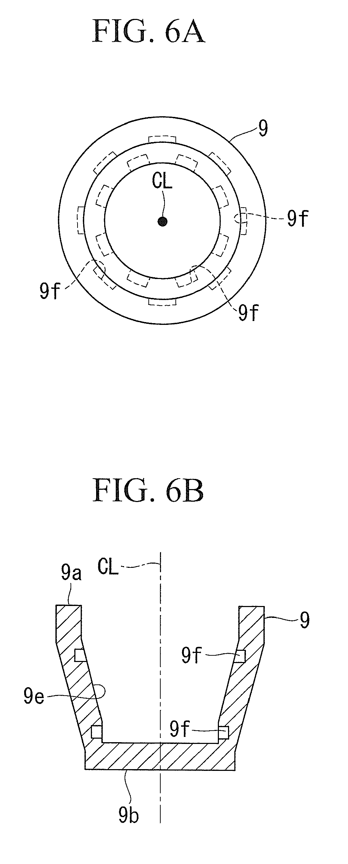

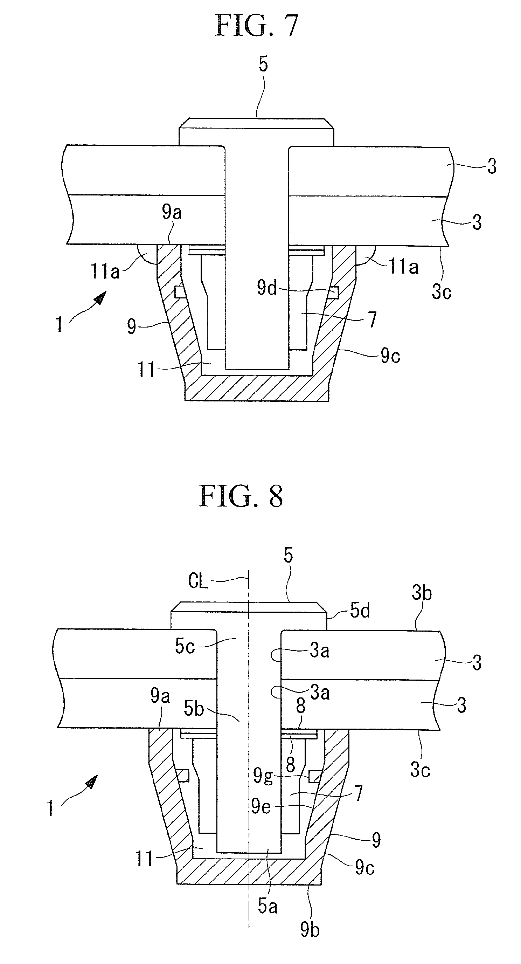

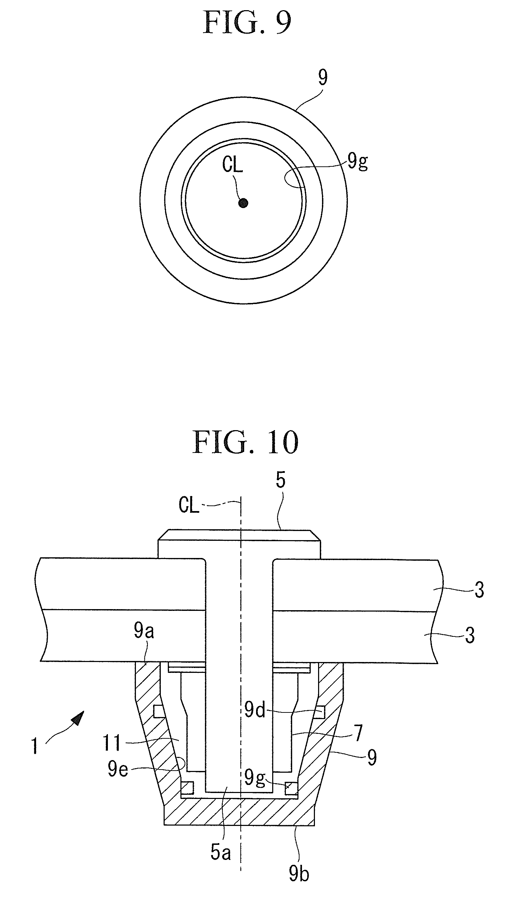

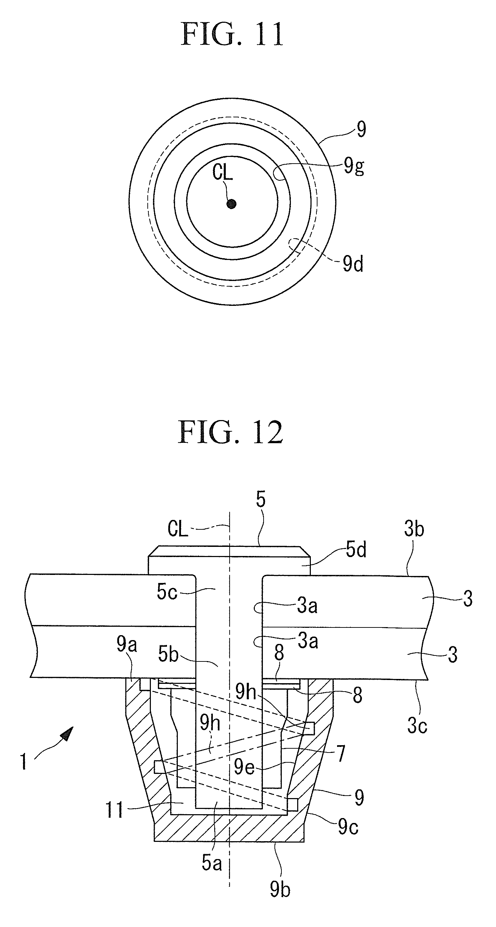

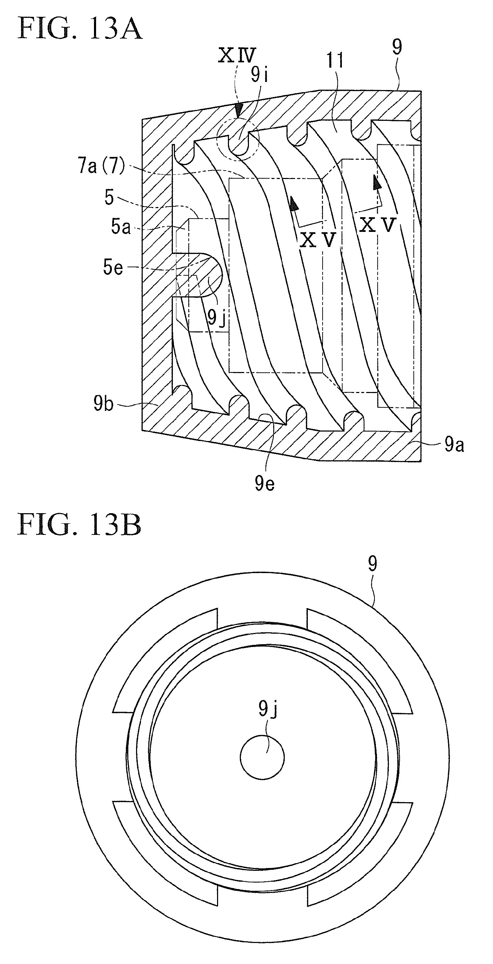

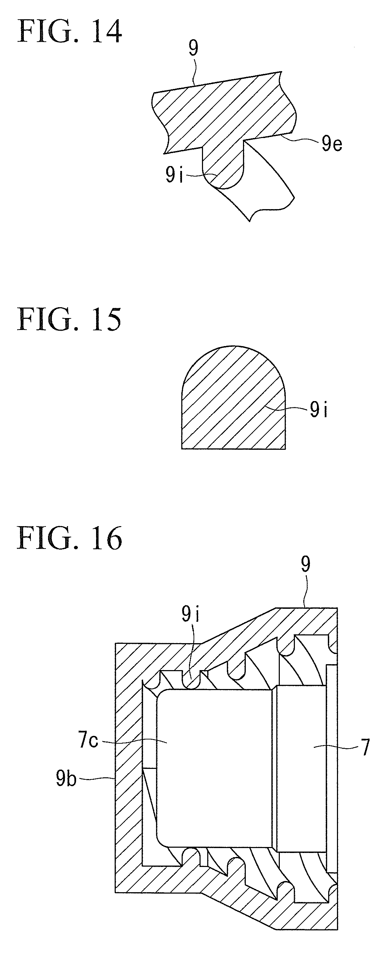

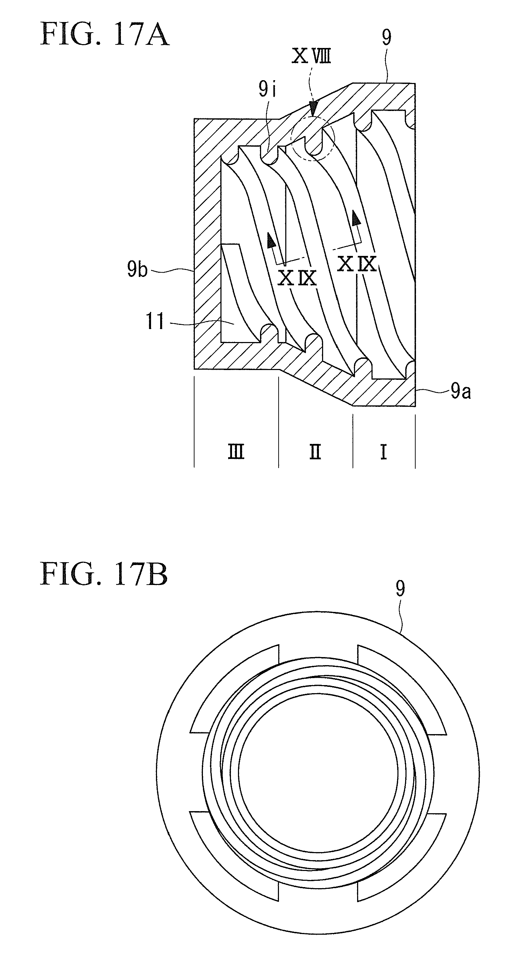

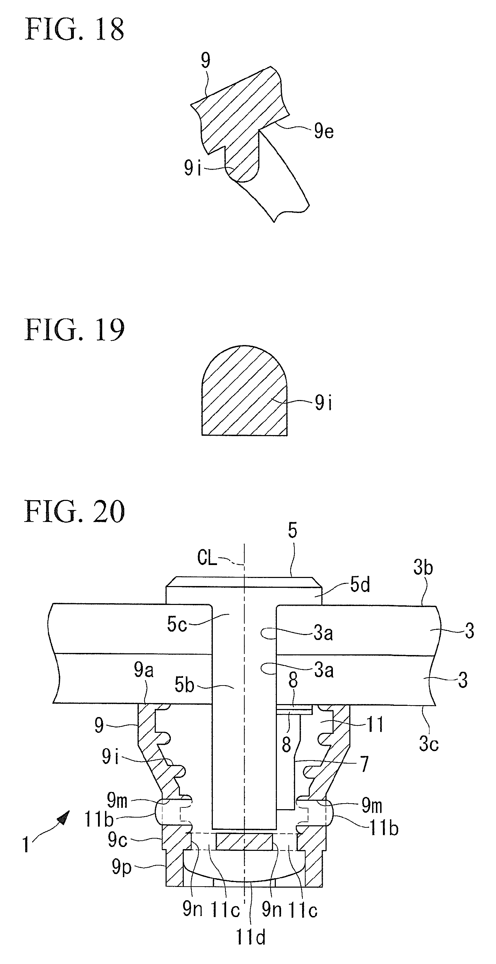

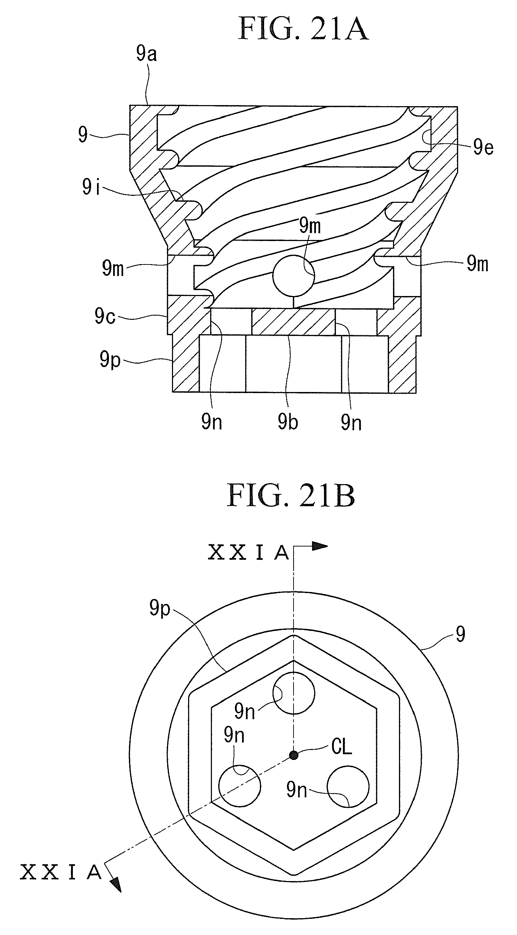

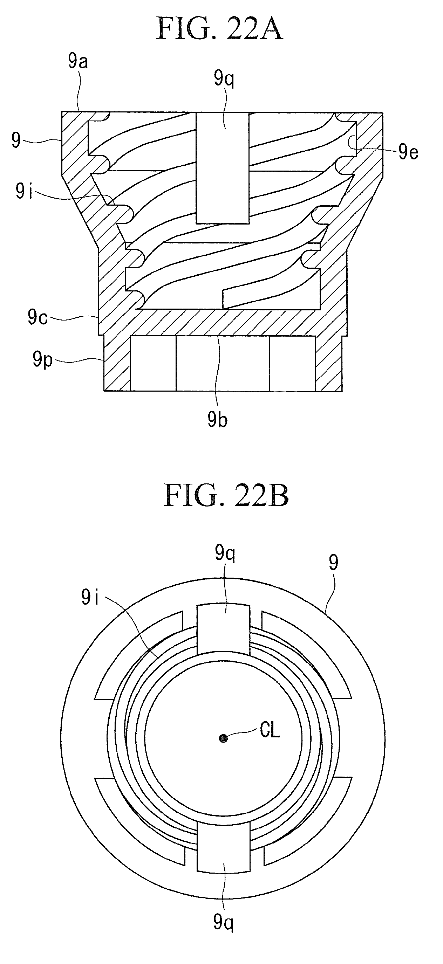

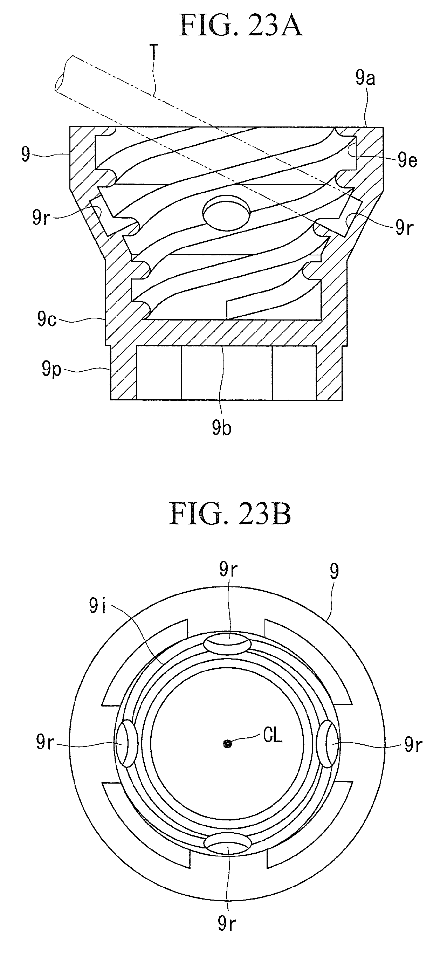

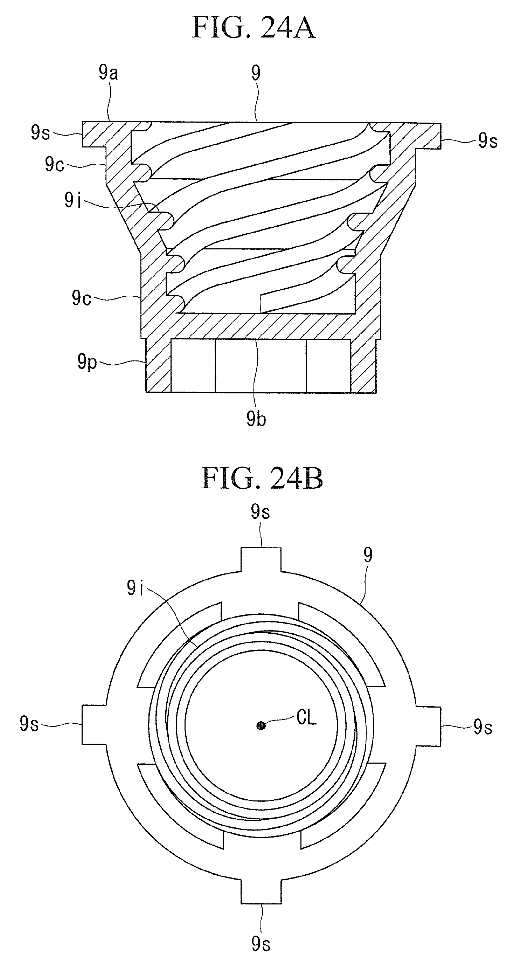

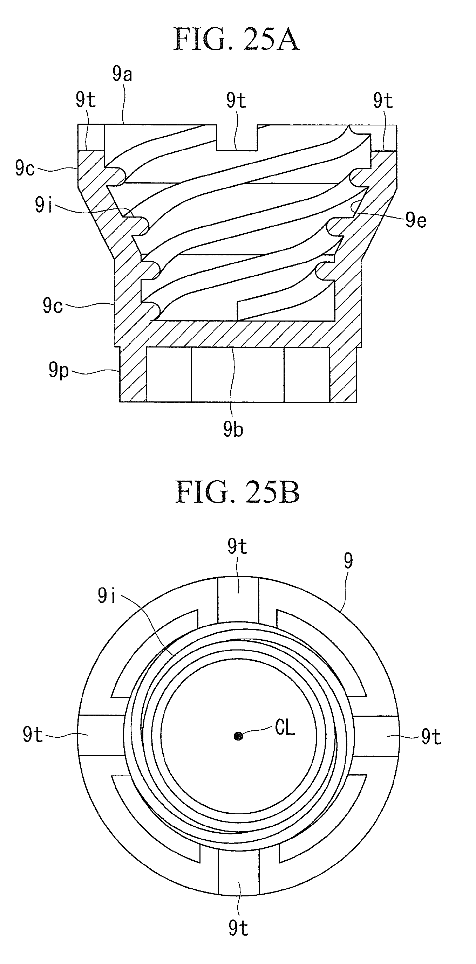

{Fig. 1} Fig. 1 is a longitudinal sectional view showing a fixing structure according to a first embodiment of the present invention.
{Fig. 2} Fig. 2 is a plan view showing a cap shown in Fig. 1.
{Fig. 3} Fig. 3 is a longitudinal sectional view showing a first modification of the cap shown in Fig. 1, in which through-grooves are formed therein.
{Fig. 4} Fig. 4 is a plan view showing a second modification of the cap shown in Fig. 1.
{Fig. 5A} Fig. 5A is a plan view showing a third modification of the cap shown in Fig. 1.
{Fig. 5B} Fig. 5B is a longitudinal sectional view of a cap shown in Fig. 5A.
{Fig. 6A} Fig. 6A is a plan view showing a fourth modification of the cap shown in Fig. 1.
{Fig. 6B} Fig. 6B is a longitudinal sectional view of a cap shown in Fig. 6A.
{Fig. 7} Fig. 7 is a longitudinal sectional view showing a fifth modification of the fixing structure shown in Fig. 1.
{Fig. 8} Fig. 8 is a longitudinal sectional view showing a fixing structure according to a second embodiment of the present invention.
{Fig. 9} Fig. 9 is a plan view showing a cap shown in Fig. 8.
{Fig. 10} Fig. 10 is a longitudinal sectional view showing a modification of the fixing structure shown in Fig. 8.
{Fig. 11} Fig. 11 is a plan view showing a cap shown in Fig. 10.
{Fig. 12} Fig. 12 is a longitudinal sectional view showing a fixing structure according to a third embodiment of the present invention.
{Fig. 13A} Fig. 13A is a longitudinal sectional view showing a cap that is in a non-engaged state with respect to a fastener and a collar, according to a fourth embodiment of the present invention.
{Fig. 13B} Fig. 13B is a plan view of the cap shown in Fig. 13A.
{Fig. 14} Fig. 14 is a partial view showing, in enlarged form, a portion XIV shown in Fig. 13A.
{Fig. 15} Fig. 15 is a sectional view along XV-XV shown in Fig. 13A.
{Fig. 16} Fig. 16 is a longitudinal sectional view showing a cap that is in a non-engaged state with respect to the fastener and the collar, according to a fifth embodiment of the present invention.
{Fig. 17A} Fig. 17A is a longitudinal sectional view of the cap shown in Fig. 16.
{Fig. 17B} Fig. 17B is a plan view of the cap shown in Fig. 17A.
{Fig. 18} Fig. 18 is a partial view showing, in enlarged form, a portion XVIII shown in Fig. 17A.
{Fig. 19} Fig. 19 is a sectional view along XIX-XIX shown in Fig. 17A.
{Fig. 20} Fig. 20 is a longitudinal sectional view showing a fixing structure according to a sixth embodiment of the present invention.
{Fig. 21A} Fig. 21A is a longitudinal sectional view showing a cap according to the sixth embodiment of the present invention.
{Fig. 21B} Fig. 21B is a bottom view of the cap shown in Fig. 21A.
{Fig. 22A} Fig. 22A is a longitudinal sectional view showing a cap according to a seventh embodiment of the present invention.
{Fig. 22B} Fig. 22B is a bottom view of the cap shown in Fig. 22A.
{Fig. 23A} Fig. 23A is a longitudinal sectional view showing a cap according to an eighth embodiment of the present invention.
{Fig. 23B} Fig. 23B is a bottom view of the cap shown in Fig. 23A.
{Fig. 24A} Fig. 24A is a longitudinal sectional view showing a cap according to a ninth embodiment of the present invention.
{Fig. 24B} Fig. 24B is a bottom view of the cap shown in Fig. 24A.
{Fig. 25A} Fig. 25A is a longitudinal sectional view showing a cap according to a tenth embodiment of the present invention.
{Fig. 25B} Fig. 25B is a bottom view of the cap shown in Fig. 25A.
{Fig. 26} Fig. 26 is a longitudinal sectional view showing a cap according to an eleventh embodiment of the present invention.
{Fig. 27} Fig. 27 is a longitudinal sectional view showing a conventional fixing structure.

### {Description of Embodiments}

Embodiments of the present invention will be described below with reference to the drawings.

### First Embodiment

A first embodiment of the present invention will be described below with reference to Fig. 1.

Fig. 1 shows a fixing structure 1 of this embodiment in longitudinal cross-section.

The fixing structure 1 is used around a fuel tank of an aircraft in this embodiment and includes a fastener 5 that is inserted into through-holes 3a formed in overlaid structural members 3, a collar 7 that is fastened onto a distal end 5a of the fastener 5 via a washer 8, and a cap 9 that is disposed so as to surround the distal end 5a of the fastener 5 and the collar 7.

Examples of the structural members 3 include aircraft skin, stringer, rib, and spar, and metallic materials, such as aluminum alloy, or composite materials, such as CFRP (carbon fiber reinforced plastic) and GFRP (glass fiber reinforced plastic), can be used therefor. In Fig. 1, a first-side surface 3b (upper side in the figure) of the structural members 3 is located outside the fuel tank, and a second-side surface 3c (lower side in the figure) of the structural members 3 is located inside the fuel tank.

The fastener 5 is made of metal, such as titanium alloy, and includes a shaft 5b extending in the direction of a center axis line CL and a head 5d provided at a base end 5c of the shaft 5b. The shaft 5b is typically formed in a cylindrical shape, and the size thereof in the direction of the center axis line CL is longer than the total axiswise size of the overlaid structural members 3, the washer 8, and the collar 7.

The head 5d has a diameter larger than that of the shaft 5b and also larger than those of the through-holes 3a, which are formed in the structural members 3. Thus, the head 5d is locked on the first-side surface 3b of the structural members 3 without being inserted into the through-holes 3a.

A male thread groove onto which the collar 7 is screwed is formed in the distal end 5a of the shaft 5b of the fastener 5.

The collar 7 is made of metal, such as titanium alloy, and has a cylindrical shape in which a through-hole is formed in the direction of the center axis line CL. A female thread groove corresponding to the male thread groove formed in the distal end 5a of the fastener 5 is formed in an inner peripheral surface forming the through-hole of the collar 7. Thus, the fastener 5 and the collar 7 are screwed together. Note that, instead of the structure in which the fastener 5 and the collar 7 are screwed together, it is possible to adopt a structure in which a plurality of ring-shaped grooves are formed stepwise in the distal end 5a of the fastener 5 in the direction of the center axis line CL, corresponding grooves are also formed in the inner peripheral surface of the collar 7, and the fastener 5 and the collar 7 are mutually fixed in a lock-bolt manner.

The cap 9 is made of a plastic insulating material, such as PTFE (polytetrafluoroethylene) or PEEK (polyether ether ketone), and has a cup shape having an open end 9a at one end where an opening is formed and a bottom 9b at the other end. An outer peripheral portion 9c of the cap 9 has a shape whose diameter is increased from the bottom 9b toward the open end 9a. However, the shape of the outer peripheral portion 9c is not limited thereto, and the outer peripheral portion 9c may have a cylindrical shape whose diameter is constant or a shape whose diameter is reduced from the bottom toward the open end 9a.

A concave groove (concave part, engagement part) 9d is formed in an inner peripheral surface 9e of the cap 9. As shown in Fig. 2, the concave groove 9d is formed in an endless manner along an annular track whose center axis line is the same as the center axis line CL of the fastener 5. In this embodiment, the one concave groove 9d is formed.

As is clear from Fig. 1, the cap 9 is attached, in a non-engaged state, to the distal end 5a of the fastener 5 and the collar 7. That is to say, the cap 9 is not directly fixed to the fastener 5 or the collar 7.

A sealant (filling material) 11 is filled in a space formed between the inner peripheral surface 9e of the cap 9 and the second-side surface 3c of the structural members 3. A silicon-based insulating material is typically used for the sealant 11, and, when used for aircraft fuel tanks, a fuel-tank sealant is used. Note that, instead of the sealant 11, an adhesive agent may be used as the filling material.

The sealant 11 enters the concave groove 9d formed in the inner peripheral surface 9e of the cap and is accommodated therein. Thus, the cap 9 and the sealant 11 are engaged, thus being mechanically coupled.

In this way, the fastener 5 and the collar 7, which are made of conducting materials, such as metal, are surrounded by the cap 9, which is made of an insulating material, and the sealant 11, which is made of an insulating material, is filled in the cap 9, thereby preventing the occurrence of sparks in the fuel tank at the time of a lightning strike.

Next, an assembly method for the fixing structure 1, having the above-described structure, will be described.

First, the shaft 5b of the fastener 5 is inserted, starting from the distal end 5a, into the through-holes 3a formed in the overlaid structural members 3. Then, the collar 7 is screwed onto the distal end 5a protruding from the second-side surface 3c of the structural members 3, with the washer 8 being interposed therebetween. Thus, the overlaid structural members 3 are fixed.

After a predetermined amount of the sealant 11 is poured into the cap 9, the cap 9 is attached so as to surround the distal end 5a of the fastener 5 and the collar 7. When the cap 9 is attached such that the open end 9a thereof is brought into contact with the second-side surface 3c of the structural members 3, the sealant 11 in the cap 9 flows around the fastener 5 and the collar 7 and fills the space surrounded by the inner peripheral surface 9e of the cap 9 and the second-side surface 3c of the structural members 3. Thereafter, while maintaining this state, the sealant 11 is solidified, and the cap 9 is fixed to the sealant 11.

Note that, if the concave groove 9d formed in the cap 9 is visible from the outside, it can be used as a marker line indicating the amount of the sealant 11 to be filled.

According to this embodiment, the following advantageous effects are afforded.

The cap 9 is attached, in a non-engaged state, to the distal end 5a of the fastener 5 and the collar 7. The concave groove 9d is formed in the inner peripheral surface 9e of the cap 9, and the sealant 11 is accommodated in the concave groove 9d for engagement, thereby mechanically coupling the cap 9 with the sealant 11. Thus, the cap 9 can be stably fixed while preventing it from falling off, without adopting a structure in which a cap and a distal end of a fastener are screwed together (see PTLs 2 and 3).

Furthermore, because a male thread portion (see male thread portion 101a in Fig. 20) onto which the cap is to be screwed does not need to be additionally provided at the distal end of the fastener, it is possible to use existing fasteners on which a male thread portion is not additionally provided and to avoid a situation in which the distal end of the fastener 5 is elongated due to the additionally provided male thread portion, which would increase the axial length of the cap 9. Furthermore, because the axial lengths of the distal end of the fastener 5 and the cap 9 can be reduced, it is possible to reduce the risk of interference with structural members adjacent thereto and to reduce the weight.

Furthermore, because the concave groove 9d is formed along the entire inner peripheral surface 9e of the cap 9 to form an engagement area on the entire circumference, the mechanical coupling strength between the cap 9 and the sealant 11 can be increased.

Note that this embodiment can be modified as described below.

### First Modification

As shown in Fig. 3, one or more through-grooves 9k that penetrate the cap 9 while extending to the outer peripheral portion 9c thereof in the radial direction may be provided in the concave groove 9d. Thus, when the cap 9 is attached, the sealant 11 in the cap 9 is pushed out and guided to the outer peripheral portion 9c of the cap 9, thereby making it possible to reliably fill the sealant 11 in the concave groove 9d.

### Second Modification

As shown in Fig. 4, the engagement part that engages with the sealant 11 may be formed of discretely-formed separate concave grooves 9f. The separate concave grooves 9f are formed along an annular track centered on the center axis line CL.

The distances between adjacent separate concave grooves 9f may be equal or unequal. Furthermore, the number of the separate concave grooves 9f can be desirably set.

Furthermore, the separate concave grooves 9f may be provided with the through-grooves 9k shown in Fig. 3.

### Third Modification

As shown in Figs. 5, the concave groove 9d shown in Fig. 1 may be provided at multiple stages in the direction of the center axis line CL. In Figs. 5, the concave groove 9d is provided at two stages as an example case. In this way, by providing the concave groove 9d at multiple stages, the number of engagement parts that engage with the sealant 11 is increased, thus further increasing the mechanical coupling strength.

### Fourth Modification

As shown in Figs. 6, the separate concave grooves 9f shown in Fig. 4 may be provided at multiple stages in the direction of the center axis line CL. In Figs. 6, the separate concave grooves 9f are provided at two stages as an example case. In this way, by providing the separate concave grooves 9f at multiple stages, the number of engagement parts that engage with the sealant 11 is increased, thus further increasing the mechanical coupling strength.

Furthermore, although not shown, the concave groove 9d shown in Fig. 1 and the separate concave grooves 9f shown in Fig. 4 may be combined to form multiple-stage engagement parts. For example, the concave groove 9d (or the separate concave grooves 9f) may be formed closer to the bottom 9b of the cap 9, and the separate concave grooves 9f (or the concave groove 9d) may be formed closer to the open end 9a of the cap 9.

### Fifth Modification

Furthermore, as shown in Fig. 7, a sealant 11a may be provided at a corner between the outer peripheral portion 9c at the open end 9a of the cap 9 and the second-side surface 3c (lower side in the figure) of the structural members 3. In this way, by providing the sealant 11a between the outer peripheral portion 9c of the cap 9 and the second-side surface 3c of the structural members 3, the cap 9 can be fixed while being held from the outer peripheral surface side. Thus, the coupling strength of the cap 9 can be further increased.

Providing the sealant 11a, as shown in Fig. 7, can be realized by allowing the sealant 11 to leak out (be squeezed out) from a gap between the open end 9a of the cap 9 and the second-side surface 3c of the structural members 3 when the cap 9 is attached.

### Second Embodiment

Next, a second embodiment of the present invention will be described with reference to Fig. 8.

This embodiment differs from the first embodiment in that, whereas the concave groove 9d or the separate concave grooves 9f serve as the engagement part in the first embodiment, a convex part 9g serves as the engagement part, and other points are the same. Therefore, identical reference symbols are assigned to the same structural parts, and a description thereof will be omitted.

As shown in Fig. 8, the convex part 9g, which protrudes into the sealant 11, is provided on the inner peripheral surface 9e of the cap 9. As shown in Fig. 9, the convex part 9g is formed in an endless manner along an annular track whose center axis line is the same as the center axis line CL as the fastener 5. In this embodiment, the one convex part 9g is formed.

As is clear from Fig. 8, the cap 9 is attached, in a non-engaged state, to the distal end 5a of the fastener 5 and the collar 7, and the convex part 9g is also disposed in a non-engaged state with respect to the collar 7. That is to say, the cap 9 is not directly fixed to the fastener 5 or the collar 7.

In this way, according to this embodiment, with the convex part 9g, the cap 9 and the sealant 11 can be engaged, thereby being mechanically coupled.

Furthermore, as with the concave groove 9d, if the convex part 9g is visible from the outside, it can also be used as a marker line indicating the amount of the sealant 11 to be filled.

Furthermore, when the amount of protrusion of the convex part 9g is adjusted to set a desired clearance with respect to the collar 7 or the fastener 5, the convex part 9g can be used as a centering part. Thus, when the cap 9 is attached, a situation in which the cap 9 is misaligned depending on the level of skill of a worker is prevented, and the ability to prevent sparks at the time of a lightning strike is not deteriorated.

Note that, in this embodiment, although the engagement part is formed of the endless convex part 9g, it may be formed of separate convex parts that are obtained by circumferentially dividing the convex part 9g.

Furthermore, the convex part 9g may be provided at multiple stages in the direction of the center axis line CL.

Furthermore, this embodiment can be modified as described below.

As shown in Figs. 10 and 11, the concave groove 9d (see Fig. 1) shown in the first embodiment may be formed closer to the open end 9a of the cap 9, and the convex part 9g of this embodiment may be provided closer to the bottom 9b of the cap 9. In this way, by providing the multiple engagement parts, the mechanical coupling strength between the cap 9 and the sealant 11 can be improved. Furthermore, by providing the convex part 9g closer to the bottom 9b of the cap 9, the convex part 9g can be used as a centering part for the distal end 5a of the fastener 5.

Furthermore, the way of combining the convex part 9g and the concave groove 9d can be determined as desired. The convex part 9g may be provided closer to the open end 9a of the cap 9, and the concave groove 9d may be provided closer to the bottom 9b. Furthermore, the engagement part may be provided at three or more stages. Furthermore, separate convex parts may be provided instead of the convex part 9g, and the separate concave grooves 9f (see Fig. 4) may be provided instead of the concave groove 9d.

### Third Embodiment

Next, a third embodiment of the present invention will be described with reference to Fig. 12.

This embodiment differs from the first embodiment in that a spiral concave groove 9h formed in a spiral manner is provided instead of the concave groove 9d of the first embodiment, and other points are the same. Therefore, identical reference symbols are assigned to the same structural parts, and a description thereof will be omitted.

As shown in Fig. 12, the spiral concave groove 9h is formed in the inner peripheral surface 9e of the cap 9 along a spiral shape whose center axis line is the same as the center axis line CL of the fastener 5. The spiral concave groove 9h is continuously formed.

In this way, according to this embodiment, the concave groove 9h is formed in a spiral manner to increase the area where the engagement part is formed, thereby further increasing the mechanical coupling strength between the cap 9 and the sealant 11.

Furthermore, with the spiral concave groove 9h, because the engagement part is formed in a spiral manner, when the cap 9 is manufactured through injection molding, the cap 9 can be easily released by being rotated along the spiral concave groove 9h, thus providing the cap 9 with excellent moldability.

Furthermore, when the cap 9 is attached, voids (bubbles) generated in the sealant 11 can be guided along the spiral concave groove 9h and discharged to the outside of the cap 9. Thus, voids in the sealant 11 can be removed, enhancing the reliability.

Note that a spiral convex part (not shown) may be provided instead of the spiral concave groove 9h. As a matter of course, in the case of the spiral convex part, the amount of protrusion of the spiral convex part is adjusted so that the spiral convex part is disposed in a non-engaged state with respect to the fastener 5 and the collar 7.

### Fourth Embodiment

Next, a fourth embodiment of the present invention will be described with reference to Figs. 13 and Figs. 14 and 15.

This embodiment differs from the third embodiment in that four spiral convex parts 9i formed in a spiral manner are provided, instead of the spiral concave groove 9h of the third embodiment, which is formed in a spiral manner, and other points are the same. Therefore, identical reference symbols are assigned to the same structural parts, and a description thereof will be omitted.

Figs. 13A and 13B show the cap 9 of this embodiment attached, in a non-engaged state, to the fastener 5 and the collar 7, where Fig. 13A is a longitudinal sectional view thereof, and the Fig. 13B is a left side view of the cap 9. Furthermore, Fig. 14 is a partial view showing, in enlarged form, a portion XIV shown in Fig. 13A, and Fig. 15 is a sectional view along XV-XV shown in Fig. 13A.

As shown in Fig. 13A, the cap 9 has a tapered shape in which the diameter of the inner peripheral surface 9e is gradually reduced from the open end 9a of the cap 9 toward the bottom 9b. The inner diameter of the inner peripheral surface 9e at the open end 9a of the cap 9 is set so as to have a predetermined distance to an outer peripheral edge at an open end 7a of the collar 7.

Note that the predetermined distance is set such that the sealant 11 can be filled in a space between the inner peripheral surface 9e at the open end 9a of the cap 9 and the outer peripheral edge at the open end 7a of the collar 7 when a projecting part 9j of the cap 9, to be described later, and a recess hole 5e of the fastener 5 are engaged, to attach the cap 9 to the fastener 5 and the collar 7. The predetermined distance is preferably set within a range from 0.2 mm to 2 mm, both inclusive.

In this way, by setting the distance between the inner peripheral surface 9e at the open end 9a of the cap 9 and the outer peripheral edge at the open end 7a of the collar 7 to the predetermined distance, even if a space is generated between the open end 9a of the cap 9 and the structural members (not shown) when the cap 9 is attached, the space between the inner peripheral surface 9e at the open end 9a of the cap 9 and the outer peripheral edge at the open end 7a of the collar 7 is filled with the sealant 11, thus making it possible to ensure electrical endurance.

The projecting part 9j, projecting toward the open end 9a of the cap 9, is provided at substantially a center portion of the bottom 9b of the cap 9. A distal end of the projecting part 9j is formed in a shape to be engaged with the recess hole (positioning hole) 5e, which is provided at substantially the center of the distal end 5a of the fastener 5 and is used to support the fastener 5 with a tool, such as a hexagon wrench (not shown), in order to position the fastener 5 when the collar 7 is fastened onto the fastener 5. For example, the cross-sectional shape of the projecting part 9j in a plane perpendicular to the direction in which the projecting part 9j extends is substantially circular, as shown in Fig. 13B.

In this way, the recess hole 5e provided in the fastener 5 is used to position the fastener 5 when the collar 7 is fastened onto the fastener 5. Furthermore, the cross-sectional shape of the projecting part 9j may be substantially a hexagonal shape etc. so long as it corresponds to the recess hole 5e.

Furthermore, the four (plurality of) spiral convex parts (engagement parts, convex parts) 9i, which are continuously formed in spiral shapes, are provided on the inner peripheral surface 9e of the cap 9. The four spiral convex parts 9i are provided so as to be parallel to each other in the axial direction of the cap 9, and a lead angle thereof is constant.

Note that a preferred lead angle is within a range from 10 degrees to 30 degrees, both inclusive.

Each of the spiral convex parts 9i has a convex shape in cross section along a plane perpendicular to the direction in which the spiral shape extends, as shown in Figs. 14 and 15. The amount of protrusion of the spiral convex part 9i into the sealant 11 from the inner peripheral surface 9e of the cap 9 is substantially 1 mm, for example, and a protrusion end of the convex shape has substantially an round shape and is formed so as to draw an arc with a radius of about 0.5 mm, for example.

Note that it is preferable that the amount of protrusion of the spiral convex part 9i be set within a range from 0.5 mm to 2 mm, both inclusive, that the amount of protrusion be adjusted so as to be in a non-engaged state with respect to the fastener 5 and the collar 7, and that the round shape of the protrusion end have a radius of 0.2 mm or more.

In this way, according to this embodiment, the four (plurality of) spiral convex parts (engagement parts, convex parts) 9i are provided, thereby increasing the area of contact between the spiral convex parts 9i and the sealant (filling material) 11. Thus, the mechanical coupling strength between the cap 9 and the sealant 11 can be increased even more.

Furthermore, because all of the four spiral convex parts 9i are formed in a spiral shape, even if the inner peripheral surface 9e of the cap 9 has a shape whose diameter is reduced toward the bottom 9b, when the cap 9 is manufactured through injection molding, the molded cap 9 can be easily released by being rotated along the spiral shape, thus providing the cap 9 with excellent moldability.

Furthermore, because the four spiral convex parts 9i are provided in a spiral shape, when the cap 9 is manufactured through injection molding, the angle of rotation of the cap 9 is reduced, thus making it possible to improve the production efficiency of the cap 9.

The distal end of each of the spiral convex parts 9i, protruding into the sealant 11, is formed in substantially an round shape. Thus, compared with a case in which the distal end of the spiral convex part 9i is formed in substantially a quadrangular shape, it does not have corners, so that bubbles (voids) generated in the sealant 11 can be removed even more effectively when the cap 9 is attached. Therefore, it is possible to ensure a sufficient thickness of the sealant 11 required for electrical endurance, thus enhancing the reliability of the spark preventing function.

The projecting part 9j of the cap 9, which is provided on the inner peripheral surface 9e of the cap 9 at the position facing the distal end 5a of the fastener 5 and projects toward the fastener 5, is engaged with the fastener 5, which has the recess hole (positioning hole) 5e used to position the fastener 5 when the collar 7 is fastened onto the fastener 5, thereby making it possible to easily and reliably center the fastener 5 and the cap 9. Therefore, while preventing the cap 9 from being misaligned, it is possible to ensure a sufficient thickness of the sealant 11 required for electrical endurance, thus enhancing the reliability of the spark preventing function.

Note that the spiral convex parts 9i may be replaced with spiral concave grooves.

Furthermore, although a description has been given of a case in which the distal end of each of the spiral convex parts 9i has substantially an round shape, it may have a chamfered shape.

### Fifth Embodiment

Next, a fifth embodiment of the present invention will be described with reference to Figs. 16 to 19.

This embodiment differs from the fourth embodiment in that the collar 7 is supported by the spiral convex parts 9i that are provided near the bottom 9b of the cap 9, instead of the projecting part 9j of the fourth embodiment, which is provided on the bottom 9b of the cap 9, and other points are the same. Therefore, identical reference symbols are assigned to the same structural parts, and a description thereof will be omitted.

Fig. 16 is a longitudinal sectional view of the cap 9 of this embodiment, which is capable of supporting the collar 7. Figs. 17A and 17B show the cap 9 shown in Fig. 16 alone, where Fig. 17A is a longitudinal sectional view thereof, and Fig. 17B is a left side view thereof. Furthermore, Fig. 18 is a partial view showing, in enlarged form, a portion XVIII shown in Fig. 17A. Fig. 19 is a sectional view along XIX-XIX shown in Fig. 17A.

As shown in Fig. 17A, the cap 9 has a three-stage shape formed of an open-end straight section I in which the inner diameter of the inner peripheral surface 9e (see Fig. 18) is constant from the open end 9a toward the bottom 9b of the cap 9, a tapered section II in which the inner diameter thereof is gradually reduced from the open end 9a toward the bottom 9b, and a bottom-end straight section III in which the inner diameter of the inner peripheral surface 9e is constant and is smaller than that in the open-end straight section I.

The four (plurality of) spiral convex parts 9i (engagement parts, convex parts), which are continuously formed in spiral shapes, are provided on the inner peripheral surface 9e of the cap 9, having the three-stage shape. The cross-sectional shape of each of the spiral convex parts 9i viewed in a plane perpendicular to the direction in which the spiral shape extends is a convex shape. Fig. 18 shows a cross-sectional shape of the spiral convex part 9i that is located in the tapered section II, and Fig. 19 shows a cross-sectional shape of the spiral convex part 9i that is located in the bottom-end straight section III.

The inner peripheral surface 9e of the cap 9 that is formed of the open-end straight section I, the tapered section II, and the bottom-end straight section III has a shape such that the outer peripheral edge of a bottom part 7c (see Fig. 16) of the collar 7 is supported by the spiral convex parts 9i that are located in the bottom-end straight section III when the cap 9 is attached to the fastener (not shown) and the collar (see Fig. 16) 7.

Furthermore, when the outer peripheral edge at the bottom part 7c of the collar 7 is supported by the spiral convex parts 9i of the cap 9 that are located in the bottom-end straight section III, some gaps are formed between the distal ends of the spiral convex parts 9i and the outer peripheral edge at the bottom part 7c of the collar 7. In this way, by providing gaps between the distal ends of the spiral convex parts 9i and the outer peripheral edge at the bottom part 7c of the collar 7, it is possible to prevent a stress from being placed on the cap 9, which suppresses deterioration of the durability of the cap 9, compared with a case in which the distal ends of the spiral convex parts 9i and the outer peripheral edge at the bottom part 7c of the collar 7 are interference fitted.

In this way, according to this embodiment, the inner peripheral surface 9e of the cap 9 is formed in a shape for supporting the collar 7 via the spiral convex parts (engagement parts, convex parts) 9i such that the fastener (not shown) and the cap 9 have the same center axis line. Thus, by supporting the collar 7 with the spiral convex parts 9i located near the bottom 9b of the cap 9, the fastener and the cap 9 can be easily and reliably centered. Therefore, while preventing the cap 9 from being misaligned, it is possible to ensure a sufficient thickness of the sealant (filling material) 11 required for electrical endurance, thus enhancing the reliability of the spark preventing function.

Note that, in addition to this, as in the fourth embodiment, the projecting part 9j (see Fig. 13A) may be provided at almost the center of the bottom 9b of the cap 9 and engaged with the recess hole (not shown) in the fastener.

Furthermore, although a washer is not provided in the fourth embodiment shown in Figs. 13 and in the fifth embodiment shown in Fig. 16 unlike the first embodiment to the third embodiment, a washer may be provided in the same way as in the first embodiment to the third embodiment.

### Sixth Embodiment

Next, a sixth embodiment of the present invention will be described with reference to Fig. 20 and Figs. 21A and 21B. Fig. 20 is a longitudinal sectional view showing a fixing structure according to the sixth embodiment of the present invention. Fig. 21A is a longitudinal sectional view of a cap. Fig. 21B is a bottom view of the cap. Note that Fig. 21A is a longitudinal sectional view along the line XXIA-XXIA shown in Fig. 21B.

This embodiment differs from the fifth embodiment in that a plurality of through-holes 9m are formed in the outer peripheral portion 9c of the cap 9, a plurality of through-holes 9n are formed in the bottom 9b, and a polygonal frame 9p is formed on an outer surface of the bottom 9b, and other points are the same. Therefore, identical reference symbols are assigned to the same structural parts, and a description thereof will be omitted.

The through-holes 9m are formed in the outer peripheral portion 9c of the cap 9 at a height close to the bottom 9b at, for example, four positions in the circumferential direction at equally-spaced intervals. When viewed from the inside of the cap 9, the through-holes 9m are punched near the distal ends of the spiral engagement parts 9i.

On the other hand, the through-holes 9n are formed in the bottom 9b so as to be located inside the frame 9p and positioned eccentrically with respect to the center axis line CL of the fastener 5. The frame 9p is hexagonal in plan view (see Fig. 21B), for example, and can be turned by using a tool, such as a spanner or a socket wrench.

The through-holes 9m and 9n and the frame 9p are engaged with the sealant 11 (filling material) that is filled in the cap 9 and solidified, thereby functioning as turn-restricting-shape engagement parts for restricting turning of the cap 9 about the center axis line CL of the fastener 5 with respect to the fastener 5 and the collar 7.

As shown in Fig. 20, when the cap 9 is attached to the fastener 5 and the collar 7, some of the sealant 11 filled in the cap 9 is pushed out from the through-holes 9m and the through-holes 9n and is solidified in that state, thereby forming bulging portions 11b and 11c that bulge from the through-holes 9m and 9n, respectively. It is preferable to make the bulging portions 11c bulge more inside the frame 9p to form an engagement bulging portion 11d to be engaged with the polygonal shape of the frame 9p.

Because the through-holes 9m are located in the outer peripheral portion 9c of the cap 9 and are positioned eccentrically with respect to the turning axis of the cap 9 (the center axis line CL of the fastener 5), and the through-holes 9n are also provided eccentrically with respect to the center axis line CL, the bulging portions 11b and 11c of the sealant 11, which have been pushed out from the through-holes 9m and 9n and solidified, restrict free turning of the cap 9 about the center axis line CL. Thus, the cap 9 can be stably fixed while preventing it from falling off the fastener 5 and the collar 7.

Note that it is preferred that the inner diameters of the through-holes 9m and 9n be about 2 mm. If the inner diameters thereof are greater than 2 mm, there is concern that, when the sealant 11 bulging from the through-holes 9m and 9n is solidified, the sealant 11 may fall back (shrink), thus resulting in insufficient engagement with the through-holes 9m and 9n.

In particular, as in this embodiment, in the case where the spiral engagement parts 9i to be engaged with the sealant 11 are provided inside the cap 9 so as to prevent the cap 9 from falling off in the axial direction, when the turn-restricting-shape engagement parts (the through holes 9m and 9n) for restricting turning of the cap 9 are also provided, as described above, a situation in which the cap 9 is loosened by freely turning along the spiral shapes of the engagement parts 9i is restricted, thus more effectively preventing the cap 9 from falling off.

Although the bulging portions 11c of the sealant 11, which have been pushed out from the through holes 9n and solidified, are pushed out to an area inside the frame 9p and solidified to form the engagement bulging portion 11d, because the frame 9p is polygonal, the frame 9p and the engagement bulging portion 11d are engaged with each other, thus restricting turning of the cap 9. Therefore, the cap 9 can be more-effectively prevented from falling off by being loosened.

Note that the shape of the frame 9p is not limited to a hexagon and may be a tetragon or an octagon; however, it is preferred that the frame 9p have a shape in which two surfaces facing each other are parallel because it is easy to hold the cap 9 as a single part or to pinch the cap 9 with a hand to make it turn. For example, when the cap 9 is manufactured through injection molding, the cap 9 can be easily released after injection molding.

Furthermore, when the cap 9 that has been attached to a fuselage of an aircraft by using the sealant 11 is removed, it is difficult to remove it with bare hands due to the fixing strength of the sealant 11; however, at that time, by engaging a tool, such as a spanner, with the frame 9p and making it turn, the cap 9 can be quickly and easily removed.

Note that, as in this embodiment, by making the filling material 11 filled in the cap 9 bulge from the through-holes 9m and 9n, an advantage is afforded in that it is possible to externally recognize if the amount of filled filling material 11 is appropriate.

### Seventh Embodiment

Next, a seventh embodiment of the present invention will be described with reference to Figs. 22A and 22B. This embodiment differs from the sixth embodiment in that, instead of the through-holes 9m and 9n in the cap 9 of the sixth embodiment, a pair of vertical grooves 9q are provided in the inner peripheral surface 9e of the cap 9 as the turn-restricting-shape engagement parts, and other points are the same. Therefore, identical reference symbols are assigned to the same structural parts, and a description thereof will be omitted.

The vertical grooves 9q extend on the inner peripheral surface 9e of the cap 9 from the open end 9a toward the bottom 9b along the center axis line CL and are formed facing each other at positions 180 degrees away from each other in the circumferential direction, for example. The number of vertical grooves 9q may be one or three or more. Although the vertical grooves 9q are formed by cutting the inner peripheral surface 9e so as to produce a wall thickness level difference from the inner peripheral surface 9e, it is possible to cut only the spiral engagement parts 9i to form grooves that are so shallow that there is almost no wall thickness level difference from the inner peripheral surface 9e.

With the vertical grooves 9q, when the cap 9 is attached, the sealant 11 (see Figs. 1, 7, and 20) filled in the cap 9 enters the vertical grooves 9q and is solidified. Because the vertical grooves 9q are provided eccentrically with respect to the center axis line CL when viewed along the center axis line CL of the fastener 5 (see Fig. 22B), turning of the cap 9 is restricted by the sealant 11 that has entered the vertical grooves 9q and has been solidified, thereby preventing the cap 9 from freely turning, being loosened, and falling off.

### Eighth Embodiment

Next, an eighth embodiment of the present invention will be described with reference to Figs. 23A and 23B. This embodiment differs from the seventh embodiment in that, instead of the vertical grooves 9q of the cap 9 of the seventh embodiment, dimples 9r are formed as the turn-restricting-shape engagement parts, and other points are the same. Therefore, identical reference symbols are assigned to the same structural parts, and a description thereof will be omitted.

The dimples 9r are formed in the inner peripheral surface 9e of the cap 9 at an almost intermediate height between the open end 9a and the bottom 9b and are formed at four positions in the circumferential direction at intervals of 90 degrees, for example. Although the number of dimples 9r may be one or more, the ease-of-engagement with the sealant 11 can be improved by providing a plurality of dimples 9r. The depths of the dimples 9r are set so as not to penetrate the thickness of the cap 9.

With the dimples 9r, when the cap 9 is attached, the sealant 11 (see Figs. 1, 7, and 20) filled in the cap 9 enters the dimples 9r and is solidified. Because the dimples 9r are provided eccentrically with respect to the center axis line CL when viewed along the center axis line CL of the fastener 5 (see Fig. 23B), turning of the cap 9 is restricted by the sealant 11 that has entered the dimples 9r and has been solidified, thereby preventing the cap 9 from freely turning, being loosened, and falling off.

The dimples 9r may be formed through post-processing by using a cutting tool T, such as an end mill or a drill, after molding of the cap 9. Note that not only the dimples 9r but also the through-holes 9m and 9n of the sixth embodiment and the vertical grooves 9q of the seventh embodiment may be formed through post-processing after molding of the cap 9.

By doing so, because it is not necessary to form the engagement parts (9m, 9n, 9q, or 9r) for restricting turning of the cap 9 when the cap 9 is manufactured through injection molding with a resin material, the structure of a mold for injection molding can be made simple. Furthermore, by additionally forming the engagement parts (9m, 9n, 9q, or 9r) for restricting the turning in a ready-made cap 9, the cap 9 can be modified to make it difficult to fall off.

### Ninth Embodiment

Next, a ninth embodiment of the present invention will be described with reference to Figs. 24A and 24B. This embodiment differs from the eighth embodiment in that, instead of the dimples 9r of the cap 9 of the eighth embodiment, protrusions 9s are formed on the open end 9a of the cap 9 as the turn-restricting-shape engagement parts, and other points are the same. Therefore, identical reference symbols are assigned to the same structural parts, and a description thereof will be omitted.

The protrusions 9s are formed in the shape of a tongue that extends a short distance from the outer peripheral portion 9c at the open end 9a along the surface 3c of the structural members 3 (see Figs. 1, 7, and 20) and are formed at four positions in the circumferential direction at intervals of 90 degrees, for example. Although the number of protrusions 9s may be one or more, the ease-of-engagement with the sealant 11 can be improved by providing a plurality of protrusions 9s.

With the protrusions 9s, when the sealant 11 is filled in the cap 9, and the cap 9 is attached to the fastener 5 and the collar 7, the protrusions 9s are enclosed by the sealant 11 (11a) leaking out from the inside of the cap 9, as shown in Fig. 7. When the sealant 11 is solidified, the protrusions 9s are engaged with the sealant 11, thus restricting turning of the cap 9. Therefore, the cap 9 can be prevented from freely turning, being loosened, and falling off.

### Tenth Embodiment

Next, a tenth embodiment of the present invention will be described with reference to Figs. 25A and 25B. This embodiment differs from the ninth embodiment in that, instead of the protrusions 9s of the cap 9 of the ninth embodiment, notches 9t are formed at the open end 9a of the cap 9 as the turn-restricting-shape engagement parts, and other points are the same. Therefore, identical reference symbols are assigned to the same structural parts, and a description thereof will be omitted.

The notches 9t are formed at the open end 9a and are formed at four positions in the circumferential direction at intervals of 90 degrees, for example. Although the number of notches 9t may be one or more, the ease-of-engagement with the sealant 11 can be improved by providing a plurality of notches 9t.

With the notches 9t, when the sealant 11 is filled in the cap 9, and the cap 9 is attached to the fastener 5 and the collar 7, the sealant 11 in the cap 9 leaks out from the notches 9t. When the sealant 11 is solidified, the notches 9t are engaged with the sealant 11, thus restricting turning of the cap 9. Therefore, the cap 9 can be prevented from freely turning, being loosened, and falling off. Note that the notches 9t can also be formed through post-processing.

### Eleventh Embodiment

Next, an eleventh embodiment of the present invention will be described with reference to Fig. 26. This embodiment differs from the sixth embodiment in that the through-holes 9m are not provided in the cap 9, the shape of an inner surface of the bottom 9b is a shallow cone, and the spiral convex parts 9i are formed so as not to reach the bottom 9b, and other points are the same. Therefore, identical reference symbols are assigned to the same structural parts, and a description thereof will be omitted.

The shape of the inner surface of the bottom 9b is a cone in which the distance to the distal end of the fastener 5, shown in Fig. 20, is increased from the outer peripheral portion of the bottom 9b toward the center. It is preferred that the angle of inclination of the conical surface be about 5 degrees, for example. The plurality of through-holes 9n are formed in the bottom 9b. As in the sixth embodiment, the through-holes 9n are located at positions inside the frame 9p and are provided eccentrically with respect to the center axis line CL of the fastener 5 (see Fig. 20).

Furthermore, a flat area 9u on which the spiral convex parts 9i are not formed is provided on the inner peripheral surface 9e of the cap 9 such that the spiral convex parts 9i do not reach the bottom 9b. The width of the flat area 9u needs to be about 1 to 2 mm.

If the spiral convex parts 9i reach the bottom 9b, air mixed when the sealant 11 is filled in the cap 9 tends to remain in a gap between the spiral convex parts 9i and the bottom 9b. The air remaining in the cap 9 in this way produces a reaction force that causes the cap 9 to fall off due to its compressibility and also forms, in the cap 9, cavities where there is no sealant 11. Thus, the ability to prevent sparks at the time of a lightning strike is reduced.

On the other hand, by providing the flat area 9u on which the spiral convex parts 9i are not formed, it is possible to prevent air mixed in the sealant 11 from remaining in the cap 9 and to improve the fixing performance of the cap 9 and the ability to prevent sparks at the time of a lightning strike.

Furthermore, when the cap 9 in which the sealant 11 has been filled is attached to the fastener 5 and the collar 7, air mixed together with the sealant 11 tends to remain in a circumferential edge of the bottom 9b. Then, as described above, by making the shape of the inner surface of the bottom 9b conical, air tending to remain in the circumferential edge of the bottom 9b can be moved toward the center of the bottom 9b and discharged to the outside from the through-holes 9n formed in the bottom 9b.

Thus, it is possible to prevent air mixed in the sealant 11 from remaining in the cap 9 and to improve the fixing performance of the cap 9 and the ability to prevent sparks at the time of a lightning strike.

Note that the present invention is not limited to the structures of the above-described embodiments, changes and modifications can be appropriately added without departing from the scope of the present invention, and an embodiment to which such changes and modifications are added is also encompassed in the scope of the present invention. For example, the structures of the above-described embodiments can be combined.

### {Reference Signs List}

- 1: fixing structure
- 3: structural member
- 3c: surface
- 5: fastener
- 5a: distal end
- 7: collar
- 8: washer
- 9: cap
- 9a: open end
- 9b: bottom
- 9c: outer peripheral portion
- 9d: concave groove (concave part, engagement part)
- 9e: inner peripheral surface
- 9f: separate concave groove (concave part, separate engagement part)
- 9g: convex part (engagement part)
- 9h: spiral concave groove (concave part, engagement part)
- 9i: spiral convex part (spiral shape)
- 9j: projecting part
- 9m: through-hole (engagement part, turn restricting shape)
- 9n: through-hole (engagement part, turn restricting shape)
- 9p: frame (engagement part, turn restricting shape)
- 9q: vertical groove (engagement part, turn restricting shape)
- 9r: dimple (engagement part, turn restricting shape)
- 9s: protrusion (engagement part, turn restricting shape)
- 9t: notch (engagement part, turn restricting shape)
- 9u: flat area
- 11: sealant (filling material)
- CL: center axis line

## Claims

1. A cap that is used in a fixing structure for fixing a plurality of overlaid structural members by means of a fastener inserted into through-holes formed in the overlaid structural members and a collar fastened onto a distal end of the fastener protruding from a surface of the structural members and that is disposed so as to surround the collar and the distal end of the fastener,
wherein the cap is attached, in a non-engaged state, to the collar and the distal end of the fastener, and
an engagement part that engages with a filling material to be filled in a space formed between an inner peripheral surface of the cap and the surface of the structural members is formed in the inner peripheral surface thereof.

2. A cap according to claim 1, wherein the engagement part is formed of a concave part that accommodates the filling material.

3. A cap according to claim 1, wherein the engagement part is formed of a convex part that protrudes into the filling material.

4. A cap according to one of claims 1 to 3, wherein the engagement part is formed in an endless manner along an annular track whose center axis line is the same as a center axis line of the fastener.

5. A cap according to one of claims 1 to 3, wherein the engagement part is formed of multiple separate engagement parts that are discretely formed along an annular track whose center axis line is the same as a center axis line of the fastener.

6. A cap according to one of claims 1 to 5, wherein the engagement part is provided at multiple stages at different positions in the direction of a center axis line of the fastener.

7. A cap according to one of claims 1 to 3, wherein the engagement part is formed along a spiral shape whose center axis line is the same as a center axis line of the fastener.

8. A cap according to claim 7, wherein the spiral shape is provided at multiple locations.

9. A cap according to claim 7 or 8, wherein the spiral shape is formed so as not to reach a bottom of the cap.

10. A cap according to one of claims 1 to 9, wherein a bottom of the concave part or a distal end of the convex part has substantially an round shape.

11. A cap according to one of claims 1 to 9, wherein a bottom of the concave part or a distal end of the convex part has a chamfered shape.

12. A cap according to one of claims 1 to 11,
wherein the fastener has, at substantially a center of the distal end thereof, a positioning hole that is used to position the fastener when the collar is fastened onto the fastener; and
a projecting part that projects toward the fastener and that is inserted into the positioning hole to perform positioning is formed on the inner peripheral surface at a position facing the distal end of the fastener.

13. A cap according to one of claims 3 to 12, wherein the inner peripheral surface is formed in a shape for supporting the collar via part of the convex part such that a center axis line of the fastener becomes a common center axis line.

14. A cap according to one of claims 1 to 13, wherein the engagement part has a turn restricting shape for restricting, by engaging with the filling material that has been solidified, turning of the cap about a center axis line of the fastener with respect to the fastener and the collar.

15. A cap according to claim 14, wherein the turn restricting shape engages with the filling material at a position eccentric with respect to a center axis line of the fastener.

16. A cap according to claim 14 or 15, wherein the engagement part having the turn restricting shape is formed of a through-hole that is formed so as to penetrate the cap at least one position in an outer peripheral portion thereof.

17. A cap according to claim 14 or 15, wherein the engagement part having the turn restricting shape is formed of at least one through-hole that is formed so as to penetrate the cap at a position in a bottom thereof, the position being located eccentrically with respect to a center axis line of the fastener.

18. A cap according to claim 14 or 15, wherein the engagement part having the turn restricting shape is formed of a vertical groove that extends on the inner peripheral surface along the center axis line.

19. A cap according to claim 14 or 15, wherein the engagement part having the turn restricting shape is formed of a dimple that is cut in the inner peripheral surface.

20. A cap according to one of claims 14 to 19, wherein the engagement part having the turn restricting shape is formed through post-processing with a cutting tool after molding of the cap.

21. A cap according to claim 14 or 15, wherein the engagement part having the turn restricting shape is formed of a protrusion that extends from an outer peripheral portion at an open end of the cap along a surface direction of the structural members.

22. A cap according to claim 14 or 15, wherein the engagement part having the turn restricting shape is formed of a notch that is formed at an open end of the cap.

23. A cap according to claim 14 or 15, wherein the engagement part having the turn restricting shape is formed of a polygonal frame that is formed on an outer surface of a bottom of the cap and a through-hole that is formed in the bottom so as to be located inside the frame.

24. A cap according to one of claims 1 to 23,
wherein a shape of an inner surface of a bottom of the cap is a cone in which a distance to the distal end of the fastener is increased from an outer peripheral portion of the bottom toward a center thereof; and
a through-hole is formed in the bottom.

25. A fixing structure comprising:
a fastener that is inserted into through-holes formed in a plurality of overlaid structural members;
a collar that is fastened onto a distal end of the fastener protruding from a surface of the structural members; and
a cap that is disposed so as to surround the collar and the distal end of the fastener,
the structural members being fixed to each other by means of the fastener and the collar,
wherein the cap is attached, in a non-engaged state, to the collar and the distal end of the fastener; and
an engagement part that engages with a filling material to be filled in a space formed between an inner peripheral surface of the cap and the surface of the structural members is formed in the inner peripheral surface thereof.

26. A fixing structure according to claim 25, wherein the engagement part has a turn restricting shape for engaging the cap with the filling material filled between an outer peripheral surface of the cap and the surface of the structural members, at a position eccentric with respect to a center axis line of the fastener.

27. A fixing structure according to claim 24 or 25, wherein the filling material is provided between an outer peripheral surface of the cap and the surface of the structural members.
